# EUROPEAN PATENT APPLICATION

(11) **EP 4 234 137 A1**
(43) Date of publication of application: **30.08.2023**
(21) Application number: 23158104.2
(22) Date of filing: 23.02.2023
(51) Int. Cl.: B23B 39/16

(54) **UNIT FOR INCLINED DRILLING, MACHINING CENTER EQUIPPED WITH SUCH UNIT FOR INCLINED DRILLING, AND OPERATING METHOD OF THE SAME**

(30) Priority: 28.02.2022 IT 202200003719
(71) Applicant: SCM Group S.p.A., 47921 Rimini (RN) (IT)
(72) Inventor: VANNUCCI, Carlo, 47921 RIMINI (RN) (IT); BERTUCCIOLI, Alessandro, 47921 RIMINI (RN) (IT); NERI, Alessandro, 47921 RIMINI (RN) (IT)
(74) Representative: Tiburzi, Andrea

(57) **Abstract**

The present invention relates to a drilling unit (5A, 5B, 5C, 5D) for drilling a panel (P) made of wood, fiberglass, plastic, and the like, wherein said panel (P) comprises at least one upper face (Fs), at least one lower face (Fi) and side faces (Fa, Fp, Fld, Fls), comprising a frame (51), motor means (M), installed on said frame (51), and at least one spindle (521), comprising a housing for housing a respective drill bit (522), operated by said motor means (54), characterized in that said at least one spindle (521) is arranged at an inclination angle (*α*) with respect to said upper face (Fs) or said lower face (Fi) or said side faces (Fa, Fp, Fld, Fls) of said panel (P) to be drilled.

The present invention also relates to a machining center (1) and to an operating method of the same unit.

## Description

The present invention relates to a unit for inclined drilling, machining center equipped with such unit for inclined drilling, and operating method of the same.

### Field of invention

More in detail, the invention relates to an inclined drilling unit designed and manufactured in particular to allow the creation of angled or inclined holes with respect to the surface of the panel faces.

In the following, the description will be directed in particular to the drilling of wooden panels, but it is clear that the same should not be considered limited to this specific use.

### Prior art

As is well known, there are currently machines for drilling panels. In particular, in the construction of furniture in general, wooden panels are used, which, as is known, must be drilled for the introduction of pins or nuts, necessary for coupling the different panels for the construction of the frame of the furniture itself.

Generally, holes have an axis of symmetry perpendicular to the surface on which they are made. This means that the coupling between perpendicular elements forming the frame of the piece of furniture to be made can easily loosen over time.

New types of coupling have recently been introduced, which provide for the creation of holes whose axis of symmetry is inclined with respect to the surface on which the hole itself is made. This generally has the advantage of both allowing for simpler assembly and for allowing for a more secure and long-lasting coupling. From a technological point of view, it is rather complicated to adapt machines designed for making non-inclined holes so that they can drill inclined holes. In fact, it is necessary to foresee machine stops and specific modifications.

It is clear that this procedure is expensive in economic terms, especially in the case of large-scale mass production of panels.

### Scope of the invention

In light of the above, it is, therefore, an object of the present invention to propose a drilling unit, which can easily make holes at different angles and on different faces of the panels, to allow the creation of couplings between panels for the creation of frames of furniture and the like.

Another object of the invention is to propose a drilling unit, which is flexible, can also adapt to the dimensions and different thicknesses of the panels, and allows the drilling of different faces of a panel.

Finally, the object of the present invention is to propose an operating method of the drilling unit.

### Object of the invention

It is therefore specific object of the present invention a drilling unit for drilling a panel made of wood, fiberglass, plastic, and the like, wherein said panel comprises at least one upper face, at least one lower face and side faces, comprising a frame, motor means, installed on said frame, and at least one spindle, comprising a housing for housing a respective drill bit, operated by said motor means, characterized in that said at least one spindle is arranged at an inclination angle with respect to said upper face or said lower face or said side faces of said panel to be drilled.

Always according to the invention, said drilling unit may comprise at least one first spindle holder, wherein said at least one spindle is installed in said spindle holder.

Still according to the invention, said first spindle holder may assume a retracted position or an extracted position, in which it works said panel to perform an inclined hole according to said inclination angle by means of said drill bit.

Advantageously said inclination angle may be comprised between 30° and 60°, and in particular is equal to about 45°.

Further according to the invention, said drilling unit may comprise at least one second spindle holder, provided with a spindle, arranged parallel to said upper face of the panel to be machined, and wherein on said spindle a respective drill bit is installed, and said second spindle holder may assume a retracted position or a position extracted, in which said panel works to make a hole on one of said side faces of said panel by means of said drill bit.

Preferably according to the invention, said second spindle holder may be provided with two spindles, on each of which a drill bit is installed, wherein each spindle has an opposite direction to the other, so as to be arranged parallel to said upper face of the panel to be machined.

Always according to the invention, said drilling unit may comprise at least one circular blade, and at least one spindle, in which a cutter is installed.

Still according to the invention, said drilling unit may comprise at least two first spindle holders having the drill bits oriented in opposite directions along a first axis parallel to the upper surface of a panel to be machined.

Advantageously according to the invention, said drilling unit according to the preceding claim, characterized in that it comprises at least two third spindle holders, each one having a spindle, on which a drill bit is coupled inclined of said inclination angle, wherein said drill bits are oriented with opposite directions along a second axis parallel to the upper surface of a panel to be machined, and perpendicular to said first axis.

Further according to the invention, said drilling unit may comprise at least one second spindle holder, having the drill bits oriented along said first axis.

Preferably according to the invention, said drilling unit may comprise at least a fourth spindle having two spindles, arranged opposite to each other, on each of which a drill bit for drilling is coupled, wherein said drill bits are oriented along said second axis.

Always according to the invention, said drilling unit may comprise a fifth spindle holder and a sixth spindle holder, each one having two drill bits for drilling, arranged in opposite directions with respect to each other, wherein said drill bits are parallel to the upper surface of a panel to be machined, wherein said fifth spindle holder forms an acute angle with respect to said first axis, and acute said sixth spindle holder forms an acute angle with respect to said first axis.

Still according to the invention, said drilling unit may comprise a plurality of independently actuated spindles for drilling, arranged perpendicularly to the upper face of the panel to be worked.

It is further object of the present invention, a working center for processing panels in wood, fiberglass, plastic, and the like, comprising a working plane, for supporting one or more panels to be machined, which extends along a first axis, a crossbeam, arranged above said working plane, arranged along a second axis, perpendicular to said first axis, and an inclined drilling unit as defined above, installed on said crossbeam.

Always according to the invention, said crossbeam may have at least one sliding guide, to which a skid is slidingly coupled, wherein said inclined drilling unit is associated with said skid by means of a slide, and wherein said inclined drilling unit is movable with respect to said skid along a third axis, perpendicular to said first and said axis by means of a further skid, slidingly movable with respect to said skid.

Still according to the invention, said inclined drilling unit may be coupled to said crossbeam so as to rotate around an axis of rotation.

Advantageously according to the invention, said rotation axis may be parallel to said third axis.

Further according to the invention, said crossbeam may be movable along said first axis, and said inclined drilling unit may be movable on said crossbeam along said second axis.

Preferably according to the invention, said working center may comprise a machining unit for machining said one or more panels, wherein said machining unit may be associated with said at least one skid, and wherein said processing unit comprises a support frame, a multifunction unit arranged on said support frame having a circular blade, two pairs of spindles, each one equipped with drill bits, wherein each pair has a direction opposite to that of the other, along a plane parallel to that of the upper face of the panel to be machined, two further pairs of spindles, having drills, wherein the drill bits of each pair of spindles have one direction opposite to the other, along a parallel plane to that of the upper face of the panel to be machined, and a battery of spindles, with drill bits that can be operated independently of each other, arranged perpendicularly to the upper face of the panel, to make holes perpendicular to the upper face of the panel to be machined.

Always according to the invention, said working plane may comprise a bar plane having a plurality of bars arranged parallel to each other and movable, and a plurality of blocking devices for holding in position the panels to be machined and drilled, wherein each of said blocking devices is movable along a respective bar.

Still according to the invention, said working center may comprise a doweling unit, capable of rotating around a further rotation axis, having a pin magazine, a pin emission device, having a pin exit hole, functionally connected to said pin magazine, so as to collect the pins which are fed by it, and a pneumatic cylinder, for allowing the emission of a pin coming from the pin magazine through said pin exit hole of said pin emission device.

Advantageously according to the invention, said pin exit hole of said pin emission device may be arranged horizontally, to insert the pins on the lateral faces of the panel.

Further according to the invention, said pin exit hole of said pin emission device may be inclined by said inclination angle.

It is also object of the present invention a method of drilling by means of a drilling unit as defined above, comprising the steps of: A. moving said at least one spindle by placing said drill bit at an angle of inclination with respect to one of said upper or lower or lateral faces of said panel to be drilled; and B. carrying out a hole by means of said drill bit on one of said upper or lower or lateral faces of said panel to be drilled, wherein said hole has an axis forming an angle equal to the angle of inclination.

Always according to the invention, said inclination angle may be comprised between 30° and 60°, and in particular is equal to about 45°.

### Brief description of the figures

The present invention will be now described, for illustrative but not limitative purposes, according to its preferred embodiments, with particular reference to the figures of the enclosed drawings, wherein:
figure 1 shows a work center in which a first embodiment of a drilling unit according to the present invention is installed;
figure 2 shows a perspective view of a first embodiment of an inclined drilling unit;
figure 3 shows a side view of the inclined drilling unit according to figure 2;
figure 4 shows a perspective view of the inclined drilling unit according to figure 2 in a first operating position;
figure 5 shows a perspective view of the inclined drilling unit according to figure 2 in a second relative position;
figure 6 shows a panel to which an angled hole is applied;
figure 7 shows a work center, in which a second embodiment of a drilling unit according to the present invention is installed;
figure 8 shows a perspective view of the inclined drilling unit according to a second embodiment in a first operating position;
figure 9 shows a perspective view of the inclined drilling unit according to a second embodiment in a second operating position;
figure 10 shows a work center in which a third embodiment of a drilling unit according to the present invention is installed;
figure 11 shows a perspective view of a third embodiment of an inclined drilling unit;
figure 12 shows a further perspective view of the inclined drilling unit according to figure 11;
figure 13 shows a further perspective view of the inclined drilling unit according to figure 11;
figure 14 shows a perspective view of the inclined drilling unit according to the third embodiment in a first operating position;
figure 15 shows a perspective view of the inclined drilling unit according to the third embodiment in a second operating position;
Figure 16 shows a work center in which a fourth embodiment of a drilling unit according to the present invention is installed;
figure 17 shows a bottom plan view of the fourth embodiment of the inclined drilling unit according to the present invention;
figure 18 shows a perspective view of the inclined drilling unit of figure 17;
figure 19 shows a work center in which a doweling unit according to the present invention is installed; and
figure 20 shows a perspective view of the doweling unit according to the present invention.

### Detailed description

In the various figures, similar parts will be indicated with the same reference numbers.

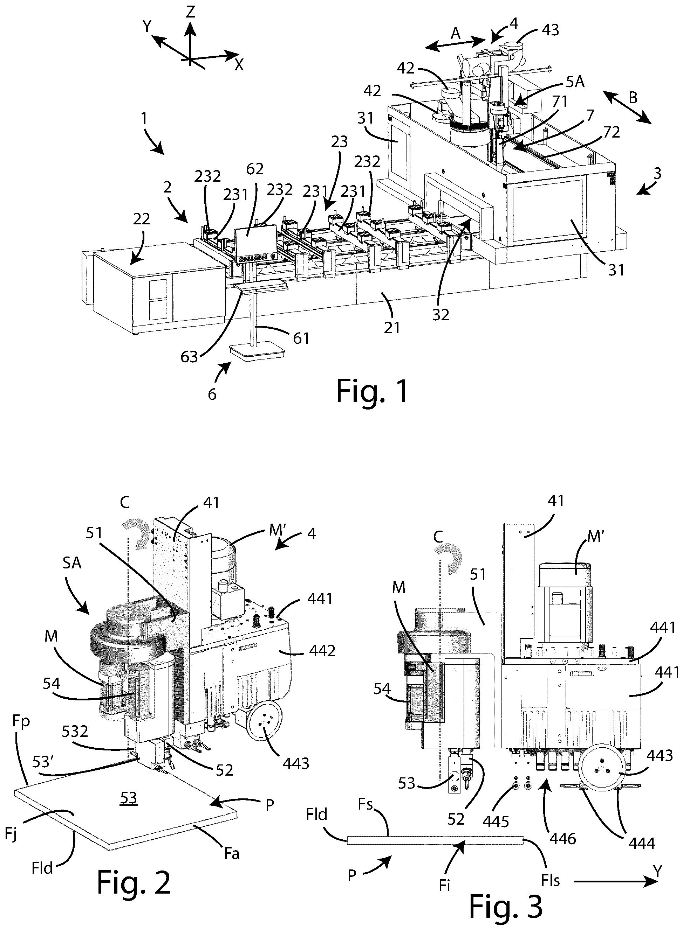

With reference to figure 1, a work center can be observed, indicated as a whole with the reference number 1.

The working center 1 mainly comprises a working plane 2, a protective cabin 3, a working group 4, an inclined drilling unit 5A according to a first embodiment of the present invention, and a control station 6.

The working plane 2 comprises a base 21, which supports the entire working center 1. Furthermore, the working plane 2 also comprises a loading surface 22, on which the panels to be drilled are arranged (not shown in the figure). A possible robot for handling the panels (not shown in the figures) can be installed near the loading surface 22. Alternatively, the panels arranged on the loading surface 22 can be moved by one or more operators.

The working plane 2 also comprises a bar plane 23 comprising a plurality of bars 231 arranged parallel to each other and movable, or movable along the direction of the X axis of the Cartesian plane again shown in figure 1. Each of the bars 231 is arranged according to the Y axis of the aforementioned Cartesian plane.

On each of the bars 231 of the bar plane 23 there is arranged a plurality of blocking devices 232, typically with a suction cup, a vacuum, or any other type of blocking device for holding the panels to be worked and drilled in position. Also in this case, said blocking devices 232 are movable along the bars, i.e., always with reference to the Cartesian plane indicated above, along the direction of the Y axis.

The protecting cabin 3, together with the machining unit 4 and the inclined drilling unit 5A, move integrally along the direction indicated by the double arrow A (or A axis), having the same direction as the X axis of the aforementioned Cartesian plane, by means of a known motion system, not shown in the figures.

Furthermore, the machining unit 4 and the inclined drilling unit 5A are in their turn movable, with respect to the working cabin 3 and to the working plane 2, also in the direction indicated by the double arrow B (or axis B), along a crosspiece 7. In particular, said crosspiece 7, and said arrow B, are oriented parallel to the Y axis of the aforementioned Cartesian plane. The assembly given by the machining unit 4 and the inclined drilling unit 5A is coupled or slidably associated with the crosspiece 7, by means of a skid 71 movable on a guide 72 obtained on said crosspiece 7 itself. The drive of the movement is obtained by means of a suitable motor.

Furthermore, said inclined drilling unit 5A is also movable with respect to said skid 72 the Z axis of the Cartesian system XYZ shown in the figure. Said Z axis is perpendicular to said first X and said Y axis by means of a further slide, slidingly movable to said first skid 72.

In this way, the inclined drilling unit 5A is capable to moving in space.

Of course, other movement systems of the inclined drilling unit 5A can also be foreseen according to known systems to give the same three degrees of freedom in space.

As can be observed, the protecting cabin 3 has Plexiglas windows 31 to allow an operator to visually inspect the interior.

Furthermore, the protecting cabin 3 also has an opening 32 arranged in correspondence with the bar plane 231.

The machining unit 4 comprises a tool magazine 42, in which the tools necessary for any machining operations that the machining unit 4 can possibly perform are arranged, such as milling and cutting tools, for example, as well as different sizes of drill bits.

The machining unit 4 also has various air intake ducts 43, for the aspiration of the chips produced as a result of drilling or machining in general.

The working center 1 is controlled by a control station 6, which can also be arranged in a remote position with respect to the working center 1 itself. The control station 6, according to the embodiment shown, comprises a support 61, a display 62, for viewing the operating parameters of the working center 1, arranged on the support 61, and interaction means 63, such as a keyboard or the like.

With reference now to figures 2 and 3, it is possible to observe in greater detail the inclined drilling unit 5A object of the present invention and the machining unit 4.

In particular, the inclined drilling unit 5A is, in the present embodiment, associated with the machining unit 4. The latter comprises a support frame 41, on which a multifunction unit 44, of the traditional type, is fixed, which comprises a motor M, for dispensing the driving force required to feed the multifunction unit 44, a support base 441, a support frame 442, and a plurality of machining tools.

To facilitate the description of the action of each machining tool, it is considered that each panel P to be machined has an upper face Fs, a lower face Fi, which is in contact with the, and is fixed on the bar plane 23, an anterior or head face Fa and a rear or tail face Fp. Furthermore, panel P also has a left side face FIs and a right side face FId.

The panel P, when arranged on the bar plane 23, has the upper surface Fs facing the machining tools of the machining group 4, while the front face Fa is oriented or facing in the positive direction of the X axis.

More specifically, in the portion 4421 of the support frame 442 facing the panel P to be machined, there are arranged a circular blade 443, two pairs of mandrels 444, each equipped with drill bits 4441, in which each pair has an opposite direction of that of the other, along a plane parallel to that of the upper face Fs of the panel P, so as to allow drilling of the front faces Fs and rear faces Fp of the sides of panel P, and two further pairs of mandrels 445, also in this case, each equipped with drill bits, in which each pair has an opposite direction to the other, along a plane parallel to that of the upper face Fs of panel P, so as to allow drilling of the left side FIs and right side P panel FId.

As can be seen, the first pair of spindles 444 have a perpendicular direction, albeit on the same plane, with respect to the second pair of spindles 445.

Furthermore, always on said portion of the support frame 442 facing the panel P to be machined, there is also arranged a battery (or array or matrix) of mandrels 446, with drill bits that can be operated independently of each other, by means of pneumatic means, arranged perpendicularly to the upper face Fs of panel P, to make holes perpendicular to the upper face Fs of the panel P.

The inclined drilling unit 5A comprises a support frame 51, which has, in the present embodiment, coupling members for coupling to the skid 71 and therefore to the crosspiece 7, to move in the space to carry out the machining on the panels P.

The inclined drilling unit 5A is also mobile. In fact, said inclined drilling unit 5A can.

The inclined drilling unit 5A is configured to rotate around a rotation axis C. The rotation axis C is arranged vertical and perpendicular to the surface of the flat bar plane 23, which is arranged parallel to said Z axis of the Cartesian plane above.

In particular, the inclined drilling unit 5A is equipped with means for rotation along the rotation axis C, such as for example they can be gear means, to allow the rotation of said unit.

The inclined drilling unit 5A is equipped with a first spindle holder 52, which comprises a spindle 521 on which a drill bit 522 is fixed, inclined by an inclination angle *α* with respect to the bar plane 23. In particular, in the embodiment shown, said inclination angle *α* is equal to 45°. In general the inclination angle *α* can be between 30° and 60°. Also, in further embodiments, said inclination angle *α* can be variable or fixed, providing suitable means to make it vary.

The first spindle holder 52 can assume a retracted or raised position, or an extracted or extended position. In particular, when the first mandrel holder 52 assumes said extracted position, said mandrel 521 can act on the panel P to make an inclined hole according to said inclination angle *α* using the drill bit 522.

In addition to the above, the drilling unit 5A also comprises a second spindle holder 53, having a pair of spindles 531, each oriented in an opposite direction to each other, and arranged parallel to the upper face Fs of the panel P or the bar plane 23.

A drill bit 532 is installed on each mandrel 531. The second mandrel holder 53 can also assume a raised or retracted position and an extracted or extended position, in which it is closest to the bar plane 23.

The inclined drilling unit 5A is also moved and actuated by the electric motor M, which also actuates all the tools of the first spindle holder 52 and of the second spindle holder 53 of the machining unit 4, and by the electric motor M', which actuates all the tools arranged on the support frame 442. The inclined drilling unit 5A is also provided with an electric motor 54 for the rotation of the inclined drilling unit 5A itself with respect to an axis C, parallel to the Z axis of the Cartesian plane shown in figure 1.

In other embodiments, the inclined drilling unit 5A can rotate around the two axes A and B (that is, with respect to the X and Y axes with reference to the Cartesian plane XYZ shown in the figures). In other words, in these further embodiments, the inclined drilling unit 5A could move in the space with six degrees of freedom, three translational degrees of freedom, and three rotational degrees of freedom. In this way, the inclined drilling unit 5A could reach any face of a panel P to be drilled.

The operation of the 5A inclined drilling unit described above is as follows.

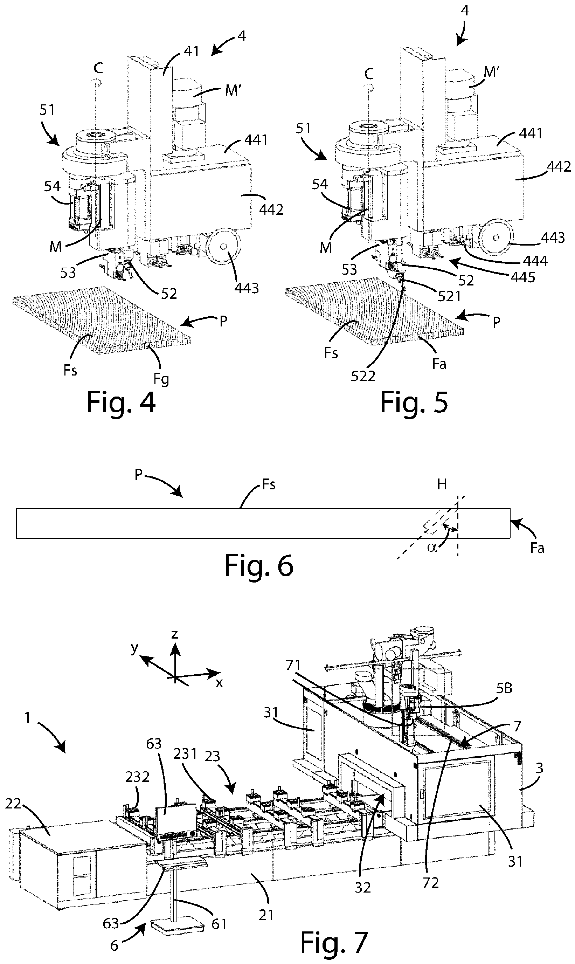

With reference to figure 4, the inclined drilling unit 5A can be observed, which can assume a suitable position for making holes with respect to the panel P, when the latter is arranged on the bar plane 23 (not visible in figure 4).

When a hole H is to be drilled at an inclination angle *α* by means of suitable pneumatic means, the spindle holder 52 passes from said retracted or raised position to said extracted or lowered position, in which it approaches the bar plane 23, as shown in figure 5A. In this way, the inclined drilling unit 5A can position itself, by means of the drilling unit 4, in a suitable position, and be rotated around the rotation axis C, so as to drill inclined holes of the aforementioned inclination angle *α* on any of the upper Fs, lower Fi, anterior Fa, posterior Fp, lateral right FId, or lateral left FIs faces.

This solution appears to be very versatile, as it easily allows the positioning of the drill bit 522, associated with the spindle 521 of the spindle holder 52.

As mentioned above, the inclined drilling unit 5A also comprises a second spindle holder 53, the bits of which can be oriented and used so as to drill the side faces Fa, Fp, FId, FIs of the panel P. In this case, the angle of the holes can be adjusted according to how much the drilling unit is rotated around the C axis.

Therefore, by means of the inclined drilling unit 5A it is possible to make, for example, inclined holes by means of the drill bit 522 of the first spindle holder 52 on the upper face Fa, or rather on the front face Fa of the panel P, to then insert blocking pins, and, for example by means of one of the bits 532 of the second spindle holder 53, make holes in correspondence with the right side face FId, with a variable inclination angle, according to the rotation of said inclined drilling unit 5A around the C axis, always for the insertion of blocking pins, or a plurality of holes on the upper face Fs of the panel P, made in correspondence with each inclined hole, for the possible insertion of pins and coupling to other panels for the construction of frames of furniture elements.

In addition, the machining unit 4 allows further traditional machining or drilling of panel P to be carried out, by means of the pairs of mandrels 444 and the further pairs of mandrels 445, as well as by means of the circular blade 443.

The inclined drilling unit 5A also has various advantages in terms of autonomy and orientation for making the holes, since, thanks to the fact that it can rotate around the rotation axis C, it is very versatile since it is able to make holes on the different faces of panel P.

Figure 6 shows the panel P in which an oblique hole has been made on the upper face Fs, as seen with an angular inclination of an angle *α*. Naturally, since the panel P is blocked in position on the bar surface by means of the blocking devices 232, while the hole H is made by means of the bit 522 of the mandrel-holder 52 when it is in the operating or extracted position, it must perform a relative movement along the axis of the hole indicated by R, and obviously inclined by an angle *α* with respect to the horizontal, i.e. to the bar plane 23. This operative movement is carried out through the ability of the inclined drilling unit 5A to move in the space.

With reference now to figures 7-9, a second embodiment of a working center 1 equipped with the inclined drilling unit 5B according to the present invention can be observed. In the present case, with respect to the first embodiment of the working center 1 shown in figure 1, the machining unit 4 is not provided, but only said inclined drilling unit 5B is provided.

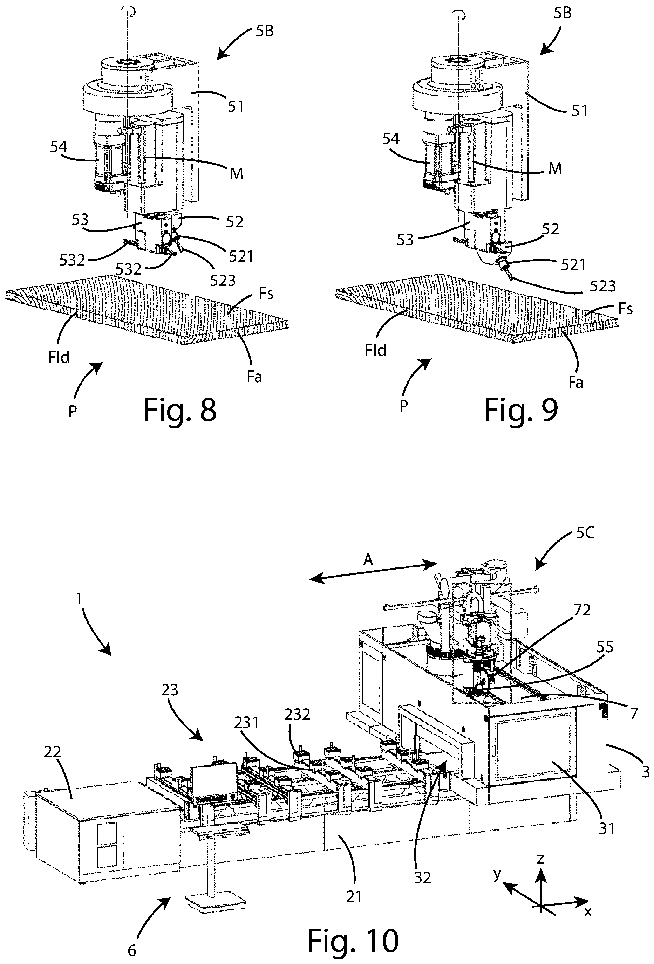

As can be seen, in particular, from figures 7 and 8, the operation of the inclined drilling unit 5B is analogous to that of the first embodiment. Also in this case the mandrel holder 52 can be operated independently of the mandrel holder 53 by means of a suitable pneumatic actuator. In this way, the inclined drill bit 522 and the drill bits 532 can reach the different faces of the panel P.

Also in this case, moreover, the inclined drilling unit can rotate around the rotation axis C, thus allowing maximum flexibility in making the holes by means of said drill bits 522 and 532, respectively of said first spindle-holder 52 and said second spindle-holder 53.

With reference now to figures 10-13, a third embodiment of a working center 1 equipped with an inclined drilling unit 5C according to the present invention can be observed.

Also, in this case, similar parts are indicated with the same numerical references and will not be described again here for the sake of greater synthesis.

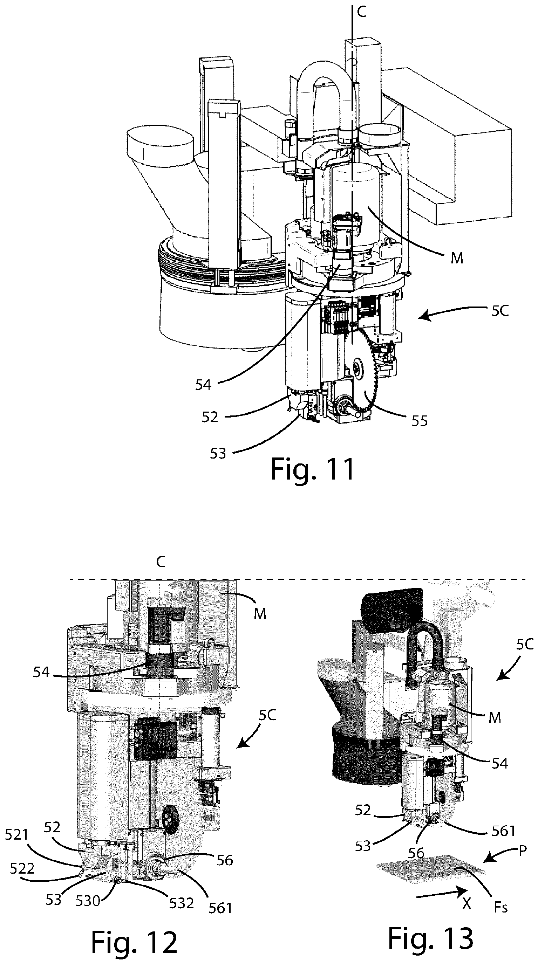

In the case under examination, the inclined drilling unit is itself equipped with additional machining tools. In particular, with reference to figures 11 and 12, it can be seen that a circular blade 55 and a pair of mandrels 56 are arranged directly on the frame 51 of the inclined drilling unit 5C, each arranged so as to be able to house a cutter 561 having opposite directions to each other, and arranged on a plane parallel to the upper face Fs of panel P to be machined. Similarly to the first 52 and second 53 spindle holders, also the circular blade 55 and the pair of spindles 56 can be actuated by actuator means, preferably of the pneumatic type, so as to assume a retracted or rest position, and an extracted or work position.

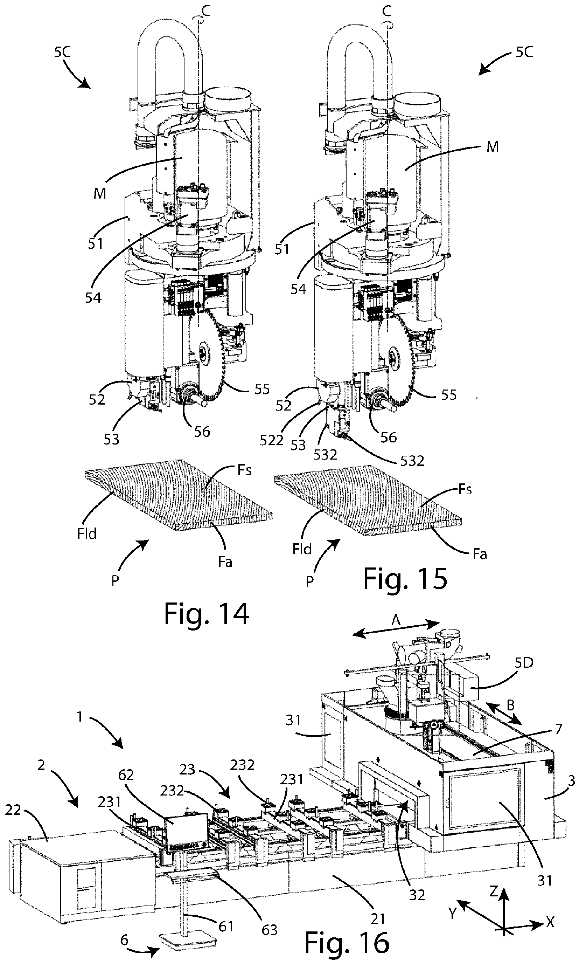

With reference now to figures 14 and 15, the operation of the inclined drilling unit 5C can be observed. In particular, in figure 13, both the first 52 and second 53 mandrel holders, and the circular blade 55 and mandrels 56 are in a retracted or rest position, i.e. non-operative with respect to the panel arranged on the bar plane 23. In figure 14 the second spindle holder 53 is shown in the working position, i.e. withdrawn, thus arranged in greater proximity to panel P.

The inclined drilling unit 5C can then be moved in the space along the planes of the Cartesian XYZ axes thanks to the motion along the bidirectional arrows A and B to position said inclined drilling unit in order to perform the machining. Naturally, thanks to the possibility of rotating around the rotation axis C, it is then possible to make holes on one of the faces of the panel P to be machined. In particular, by means of said second spindle holder 53 it is possible, suitably by rotating said inclined drilling unit 5C always around said rotation axis C, to machine the front face Fa or one of the side faces of the panel P, i.e. the front face Fa, the rear face Fp, the lateral left face FIs and/or a lateral right face FId.

As mentioned, by means of the circular blade 55 and the mandrels 56 it is also possible to carry out further machining, e.g. milling, to make the inclined drilling unit 5C more flexible.

With reference now to figure 16, a machining center 1 can be observed in which a fourth embodiment of the inclined drilling unit 5D is installed. As can be observed, in general terms, the working center 1 is entirely similar to those of the previous embodiments, differing from them only in the different structure of the inclined drilling unit 5D.

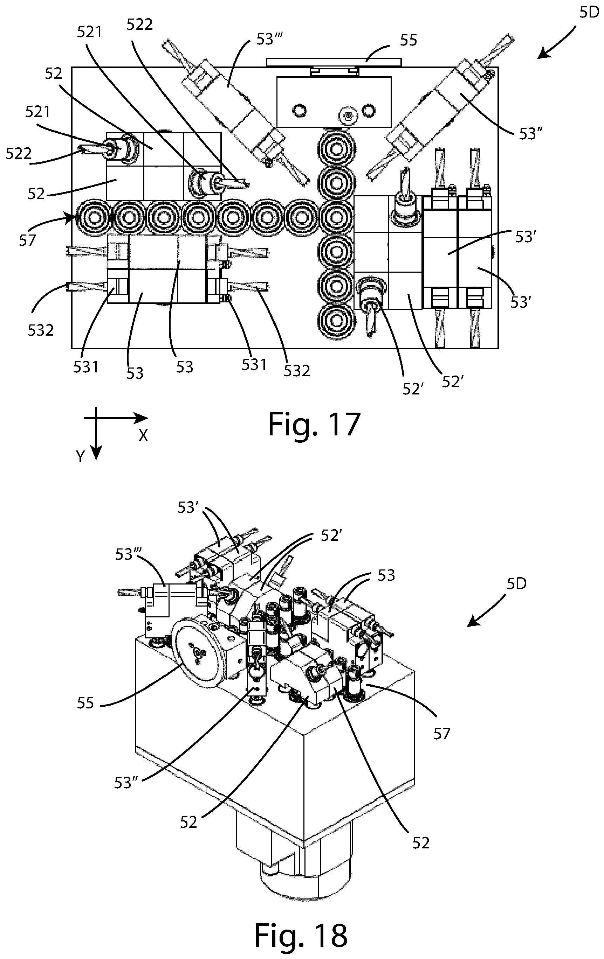

With reference to figures 17 and 18, in fact, it is possible to observe the structure of the inclined drilling unit 5D according to the present fourth embodiment. In this case, in particular, said inclined drilling unit 5D is not configured to rotate with respect to a vertical rotation axis, but has a plurality of spindle holders, each actuated by suitable actuators, generally of the pneumatic type, oriented in a different way so as to be able to make inclined and not inclined holes on the different faces of a panel P.

In particular, it can be observed that the inclined drilling unit 5D according to the present fourth embodiment comprises a pair of first spindle holders 52, each of which have a spindle 521 to which a drill bit 522 is coupled inclined by an inclination angle *α*, and a pair of second mandrel holders 53, each having two drill bits 532 arranged in an opposite way. In this case, the first and second spindle holders 52 and 53 respectively are oriented in a concordant manner with the X-axis of the Cartesian plane also indicated in figure 16.

In addition, the inclined drilling unit 5 also comprises a further two third mandrel holders 52', arranged in accordance with the Y axis of the Cartesian plane, i.e. perpendicular to the first mandrel holders 52. Said third mandrel holders also have the tips 522' inclined by the above inclination angle *α*.

Similarly, the inclined drilling unit 5D also comprises a pair of fourth mandrel holders 53', also arranged orthogonally with respect to the orientation of the second mandrel holders 53.

The inclined drilling unit 5D also comprises a further fifth and sixth spindle holder, respectively indicated with the reference numbers 53" and 53‴, each having two drill bits arranged opposite each other, and oriented respectively to form an acute angle (45° in the figure) and an obtuse angle (135° in the figure) with respect to the X axis of the Cartesian plane. In other words, said fifth and sixth spindle holders 53" and 53‴ are not aligned with respect to the X axis or the Y axis, but are inclined with respect to them.

The inclined drilling unit 5D is also equipped with a circular blade 55 and a plurality of mandrels 57 in series with drill bits that can be operated independently with pneumatic means, arranged perpendicularly to the upper face Fs of the panel P, to make perpendicular holes with respect to the upper face Fs of panel P. Figure 17 shows how the mandrels of said battery of mandrels 57 are arranged in a "T" shape. However, in other embodiments, it is possible to provide different configurations.

In this case, when it is necessary to make a hole in one of the faces of panel P, the spindle of interest is activated, according to the face of panel P to be drilled and the angle to be applied.

In particular, the mandrel holder of interest, i.e., the circular blade 55, i.e. one of the points fixed on one of the mandrels of the set of mandrels 57, is operated pneumatically, thus carrying out the required machining. Each element of the inclined drilling unit 5D, by means of the pneumatic actuators, can pass from a rest position, in which it is retracted, to an operating position, in which it is extracted and therefore approaches the panel P to be machined (drilling, sectioning...) autonomously.

In other embodiments, similarly to the inclined drilling unit 5A, the drilling units 5B, 5C, and 5D can also rotate around the two axes of A and B (that is, with respect to the X and Y axes with reference to the Cartesian plane XYZ shown in the figures). In other words, in these further embodiments, the inclined drilling units 5B, 5C, and 5D could move in the space with six degrees of freedom, three translational degrees of freedom, and three rotational degrees of freedom. In this way, the inclined drilling units 5B, 5C, and 5D could reach any face of a panel P to be drilled.

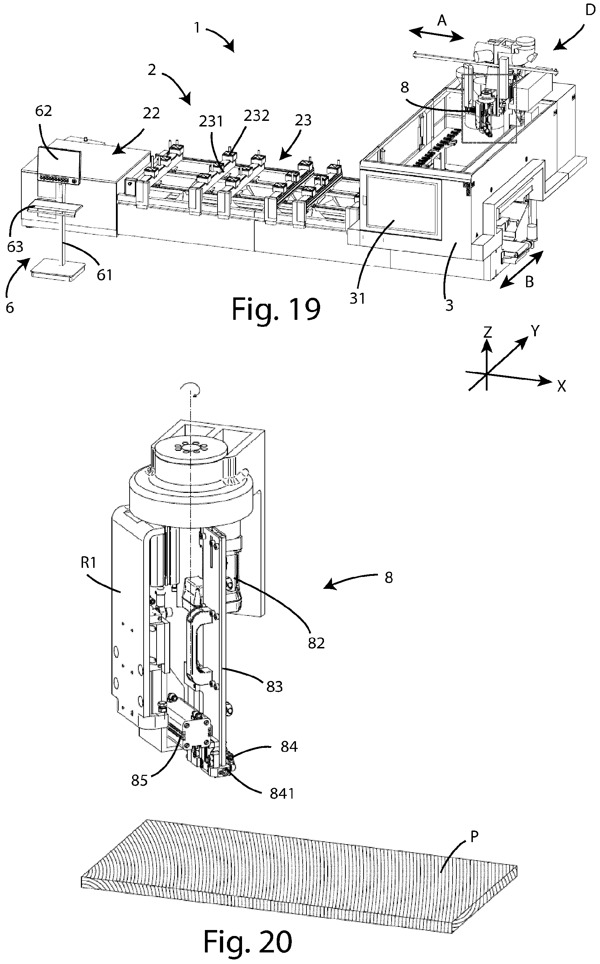

With reference now to figure 19, a working center 1 can be observed in which, in addition to the inclined drilling unit 5, which in particular can be made as any of the previously described drilling units, there is a doweling unit 8, associated with the inclined drilling unit 5. Said doweling unit 8 is capable of inserting pins, i.e. small cylindrical wooden dowels, into a hole H made by means of an inclined drilling unit 5.

Referring also to figure 20, the doweling unit 8 comprises a support frame 81 and a motor 82, installed on the support frame 81, configured to allow the rotation of the doweling unit 8 about the axis of rotation C', which is parallel to the rotation axis C of the inclined drilling unit 5.

The doweling unit 8 also comprises a pin magazine 83, arranged vertically in the embodiment shown, but which can also be arranged in a different way or according to other positions or inclinations, and a pin emission device 84 having a pin exit hole 841, positioned below the pin magazine 83, so as to collect the pins which are fed by it.

The pin exit hole 84 is arranged horizontally, to insert the pins on the side faces of the panel P, i.e. front Fa, rear Fp, right side FId or left side Fls.

In a further embodiment, the doweling unit can also comprise, or as an alternative, a pin exit hole inclined by the same angle *α* with which the drill bit 532 of the mandrel 531 is inclined.

Finally, the doweling unit 8 also comprises a pneumatic cylinder 85, to allow the emission of a pin from the pin magazine 83 through the pin exit hole 84 of the pin emission device 84.

Once the inclined drilling unit 5 has made a hole on the side surface of the panel P, i.e. on the front faces Fa, rear Fp, right side FId, or left side Fls, the doweling unit 8 is suitably rotated around the C' axis, to align the trajectory of the pin to be inserted in the hole. Subsequently, the pneumatic cylinder 85 supplies compressed air, to allow the insertion of the pin inside the hole.

If the dowel unit has a dowel exit hole inclined at an angle *α*, then it could insert pins in inclined holes H of the same angle obtained, for example, on the upper surface Fs of panel P.

### Advantages

An advantage of the present invention is that of allowing the flexible creation of orthogonal, parallel, or inclined holes with respect to the surfaces of the faces of the panel, in a flexible manner.

Another advantage of the present invention is that it allows various processes to be carried out quickly and with limited downtime.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Drilling unit (5A, 5B, 5C, 5D) for drilling a panel (P) made of wood, fiberglass, plastic, and the like, wherein said panel (P) comprises at least one upper face (Fs), at least one lower face (Fi) and side faces (Fa, Fp, FId, FIs), comprising
a frame (51),
motor means (M), installed on said frame (51), and
at least one spindle (521), comprising a housing for housing a respective drill bit (522), operated by said motor means (54),
**characterized**
**in that** said at least one spindle (521) is arranged at an inclination angle (*α*) with respect to said upper face (Fs) or said lower face (Fi) or said side faces (Fa, Fp, FId, FIs) of said panel (P) to be drilled.

2. Drilling unit (5A, 5B, 5C, 5D) according to the preceding claim, **characterized in that** it comprises at least one first spindle holder (52), wherein said at least one spindle (521) is installed in said spindle holder (52).

3. Drilling unit (5A, 5B, 5C, 5D) according to the preceding claim, **characterized in that** said first spindle holder (52) assumes a retracted position or an extracted position, in which it works said panel (P) to perform an inclined hole according to said inclination angle (*α*) by means of said drill bit (522).

4. Drilling unit (5A, 5B, 5C, 5D) according to any one of the preceding claims, **characterized in that** said inclination angle (*α*) is comprised between 30° and 60°, and in particular is equal to about 45°.

5. Drilling unit (5A, 5B, 5C, 5D) according to any one of the preceding claims, **characterized**
**in that** it comprises at least one second spindle holder (53),
provided with a spindle (531), arranged parallel to said upper face (Fs) of the panel (P) to be machined, and
wherein on said spindle (531) a respective drill bit (532) is installed, and
**in that** said second spindle holder (53) assumes a retracted position or a position extracted, in which said panel (P) works to make a hole on one of said side faces (Fa, Fp, FId, FIs) of said panel by means of said drill bit (532).

6. Drilling unit (5A, 5B, 5C, 5D) according to the preceding claim, **characterized in that** said second spindle holder (53) is provided with two spindles (531), on each of which a drill bit (532) is installed, wherein each spindle (531) has an opposite direction to the other, so as to be arranged parallel to said upper face (Fs) of the panel (P) to be machined.

7. Drilling unit (5C, 5D) according to any one of the preceding claims, **characterized in that** it comprises
at least one circular blade (55), and
at least one spindle (56), in which a cutter (561) is installed.

8. Drilling unit (5D) according to any one of the preceding claims, **characterized in that** it comprises at least two first spindle holders (52) having the drill bits (522) oriented in opposite directions along a first axis (X) parallel to the upper surface (Fs) of a panel (P) to be machined.

9. Drilling unit (5D) according to the preceding claim, **characterized in that** it comprises at least two third spindle holders (52'), each one having a spindle (521'), on which a drill bit (522') is coupled inclined of said inclination angle (*α*), wherein said drill bits (522) are oriented with opposite directions along a second axis (Y) parallel to the upper surface (Fs) of a panel (P) to be machined, and perpendicular to said first axis (X).

10. Drilling unit (5D) according to any one of claims 8 or 9, **characterized in that** it comprises at least one second spindle holder (53), having the drill bits (532) oriented along said first axis (X).

11. Drilling unit (5D) according to any one of claims 8-10, **characterized in that** it comprises at least a fourth spindle (53') having two spindles (531'), arranged opposite to each other, on each of which a drill bit (532') for drilling is coupled, wherein said drill bits (522) are oriented along said second axis (Y).

12. Drilling unit (5D) according to any one of claims 8-11, **characterized**
**in that** it comprises a fifth spindle holder (53") and a sixth spindle holder (53‴), each one having two drill bits for drilling, arranged in opposite directions with respect to each other,
wherein said drill bits are parallel to the upper surface (Fs) of a panel (P) to be machined,
wherein said fifth spindle holder (53") forms an acute angle with respect to said first axis (X), and
acute said sixth spindle holder (53‴) forms an acute angle with respect to said first axis (X).

13. Drilling unit (5D) according to any one of claims 8-12, **characterized in that** it comprises a plurality of independently actuated spindles (57) for drilling, arranged perpendicularly to the upper face (Fs) of the panel (P) to be worked.

14. Working center (1) for processing panels (P) in wood, fiberglass, plastic and the like, comprising
a working plane (2), for supporting one or more panels (P) to be machined, which extends along a first axis (X),
a crossbeam (7), arranged above said working plane (2), arranged along a second axis (Y), perpendicular to said first axis (X), and
an inclined drilling unit (5A, 5B, 5C, 5D) according to any one of claims 1-13, installed on said crossbeam (7).

15. Working center (1) according to the preceding claim, **characterized**
**in that** said crossbeam (7) has at least one sliding guide (72), to which a skid (71) is slidingly coupled,
wherein said inclined drilling unit (5) is associated with said skid (71) by means of a slide, and
wherein said inclined drilling unit (5) is movable with respect to said skid (71) along a third axis (Z), perpendicular to said first (X) and said (Y) axis by means of a further skid, slidingly movable with respect to said skid (72).

16. Working center (1) according to any one of claims 14 or 15, **characterized in that** it comprises a machining unit (4) for machining said one or more panels (P),
wherein said machining unit (4) is associated with said at least one skid (71), and
wherein said machining unit (4) comprises
a support frame (41),
a multifunction unit (44) arranged on said support frame (41) having
a circular blade (443),
two pairs of spindles (444), each one equipped with drill bits (4441), wherein each pair has a direction opposite to that of the other, along a plane parallel to that of the upper face (Fs) of the panel (P) to be machined,
two further pairs of spindles (445), having drills, wherein the drill bits of each pair of spindles (445) have one direction opposite to the other, along a parallel plane to that of the upper face (Fs) of the panel (P) to be machined, and
a battery of spindles (446), with drill bits that can be operated independently of each other, arranged perpendicularly to the upper face (Fs) of the panel (P), to make holes perpendicular to the upper face (Fs) of the panel (P) to be machined.

17. Working center (1) according to any one of claims 14-1916, **characterized in that** it comprises a doweling unit (8), capable of rotating around a further rotation axis (C'), having
a pin magazine (83),
a pin emission device (84), having a pin exit hole (841), functionally connected to said pin magazine (83), so as to collect the pins which are fed by it, and
a pneumatic cylinder (85), for allowing the emission of a pin coming from the pin magazine (83) through said pin exit hole (841) of said pin emission device (84).

18. Working center (1) according to the preceding claim, **characterized in that** said pin exit hole (841) of said pin emission device (84) is arranged horizontally, to insert the pins on the lateral faces (Fa, Fp, Fld, FIs) of the panel (P).

19. Working center (1) according to the preceding claim, **characterized in that** said pin exit hole (841) of said pin emission device (84) is inclined by said inclination angle (*α*).

20. Method of drilling by means of a drilling unit (5) according to any one of claims 1-13, comprising the steps of:
A. moving said at least one spindle (521) by placing said drill bit (522) at an angle of inclination (*α*) with respect to one of said upper (Fs) or lower (Fi) or lateral (Fa, Fp, FId, FIs) faces of said panel (P) to be drilled; and
B. carrying out a hole (H) by means of said drill bit (522) on one of said upper (Fs) or lower (Fi) or lateral (Fa, Fp, FId, FIs) faces of said panel (P) to be drilled, wherein said hole (H) has an axis (R) forming an angle equal to the angle of inclination (*α*).
